(19) Europäisches Patentamt / European Patent Office / Office européen des brevets

(11) **EP 4 318 705 A1**

(12) **EUROPEAN PATENT APPLICATION**
published in accordance with Art. 153(4) EPC

(43) Date of publication:
**07.02.2024 Bulletin 2024/06**

(21) Application number: **22938731.1**

(22) Date of filing: **23.05.2022**

(51) International Patent Classification (IPC):
**H01M 10/0525** (2010.01)    **H01M 4/13** (2010.01)

(86) International application number:
**PCT/CN2022/094487**

(87) International publication number:
**WO 2023/225797 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **WU, Lili**
  **Ningde, Fujian 352100 (CN)**

• **LI, Xuan**
  **Ningde, Fujian 352100 (CN)**
• **SUN, Xin**
  **Ningde, Fujian 352100 (CN)**
• **SONG, Peidong**
  **Ningde, Fujian 352100 (CN)**
• **YUN, Liang**
  **Ningde, Fujian 352100 (CN)**
• **CHEN, Xingbu**
  **Ningde, Fujian 352100 (CN)**
• **DONG, Miaomiao**
  **Ningde, Fujian 352100 (CN)**

(74) Representative: **Gong, Jinping**
**CocreateIP**
**Neumarkterstr. 21**
**81673 München (DE)**

(54) **POSITIVE ELECTRODE SHEET USED FOR SECONDARY BATTERY, AND SECONDARY BATTERY**

(57)    This application provides a positive electrode plate for secondary battery, a manufacturing method thereof, and a secondary battery, battery module, battery pack, and electric apparatus using such positive electrode plate for secondary battery. The positive electrode plate (10) for secondary battery includes a current collector (11) and a positive electrode active substance layer (13) and further includes a porous layer (12) containing a porous carbon material between the current collector (11) and the positive electrode active substance layer (13).

**10**

FIG. 1

EP 4 318 705 A1

**Description**

**TECHNICAL FIELD**

This application relates to the field of batteries, and in particular, to a positive electrode plate for secondary battery, a manufacturing method thereof, and a secondary battery, battery module, battery pack, and electric apparatus using such positive electrode plate for secondary battery.

**BACKGROUND**

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Despite the great development of secondary batteries, requirements are still imposed on further increasing energy density of battery cells and discharge capacity retention rate.

To increase energy density of battery cells, the means of increasing coating weight of electrode plates is usually used in the prior art. However, increasing coating weight of electrode plates leads to deterioration of liquid-phase transmission in electrolyte of secondary batteries and extends transmission paths of ions. As a result, electrochemical performance deteriorates, leading to a decrease in discharge capacity retention rate. Therefore, the structure of the existing positive electrode plates still needs improvement.

**SUMMARY**

This application has been made in view of the foregoing problems, with an objective to provide a positive electrode plate for secondary battery with high discharge capacity retention rate.

To achieve the above objective, a first aspect of this application provides a positive electrode plate for secondary battery including a current collector and a positive electrode active substance layer, and further including a porous layer containing a porous carbon material between the current collector and the positive electrode active substance layer. The porous layer containing the porous carbon material is provided between the current collector and the positive electrode active substance layer, so that air adsorbed in the porous carbon material is displaced with a solvent. Upon desorption, the adsorbed air overflows out of surface of the electrode plate, forming uniform through holes and achieving excellent porosity effect in the interior and in the surface of the electrode plate. This facilitates continuous electrolyte conduction and penetration from the exterior to the interior of the electrode plate in an electrode, enabling high-speed migration of ions, and thus increasing discharge capacity retention rate.

In any embodiment, the porous carbon material is selected from at least one of hard carbon, biomass carbon, activated carbon, carbon fiber, and carbon aerogel. These substances have high specific surface areas and abundant pores and can ensure efficient gas-liquid displacement during preparation of the electrode plate, so as to obtain the foregoing technical effects.

In any embodiment, the positive electrode plate for secondary battery is formed by the current collector, the porous layer, and the positive electrode active substance layer. In any other embodiment, the positive electrode active substance layer contains lithium nickel cobalt manganese oxide, and the porous carbon material is hard carbon, activated carbon, or carbon aerogel. For the positive electrode plate for secondary battery formed by the current collector, the porous layer, and the positive electrode active substance layer, thickness of the electrode plate does not get excessively large, electrolyte can properly penetrate the electrode plate, and ions can properly participate in reactions. In addition, lithium nickel cobalt manganese oxide is used as a positive electrode active material, and hard carbon, activated carbon, or carbon aerogel is used as the porous carbon material, so that the discharge capacity retention rate can be more reliably increased.

In any embodiment, the porous carbon material includes micropores, mesopores, and macropores, where pore diameter of the micropores is 2 nm or below, pore diameter of the mesopores is greater than 2 nm and less than 50 nm, and pore diameter of the macropores is 50 nm or above. The use of the porous carbon material including micropores, mesopores, and macropores can ensure excellent porosity effect, facilitate electrolyte penetration from the exterior to the interior of the electrode plate, and thus can increase the discharge capacity retention rate.

In any embodiment, in the porous carbon material, a total pore volume of the micropores, mesopores, and macropores is 0.02 cm$^3$/g or above, and a summed-up pore volume of the micropores and mesopores accounts for 5%-85% with respect to the total pore volume. In this application, the summed-up pore volume proportion of the micropores and mesopores reflects degree of abundance of the micropores and mesopores of the porous carbon in the electrode plate, and the proportion falling within the above range can be conducive to desorption of air adsorbed by the porous layer to form uniform through holes in the surface of the electrode plate, thereby facilitating electrolyte penetration from the exterior to the interior of the electrode plate, and thus further increasing the discharge capacity retention rate.

In any embodiment, $D_v50$ of the porous carbon material is 1 μm-100 μm, optionally 1 μm-20 μm. The porous carbon having such $D_v50$ can make the through holes formed in the surface of the electrode plate more uniform.

In any embodiment, a ratio of a specific surface area of the positive electrode plate under carbon dioxide atmosphere to a specific surface area of the positive electrode plate under nitrogen atmosphere is 2 or above. In any other embodiment, the specific surface area of the positive electrode plate under carbon dioxide atmosphere is 2 $m^2/g$ or above, and the specific surface area of the positive electrode plate under nitrogen atmosphere is 1 $m^2/g$ or below. In this application, the specific surface area can reflect degree of abundance of the micropores, mesopores, and macropores of the porous carbon in the electrode plate, and the foregoing specific surface areas being realized can further increase the discharge capacity retention rate.

In any embodiment, under a condition that thickness of the positive electrode active substance layer is set to 100 parts by thickness, thickness of the porous layer accounts for 1-50 parts by thickness, preferably 3-30 parts by thickness. A proportional relation between the thickness of the porous layer and the thickness of the positive electrode active substance layer is limited in such a way that excellent porosity effect in the surface of the electrode plate can be obtained, thereby facilitating further increase in the discharge capacity retention rate.

In any embodiment, the positive electrode plate has pores in surface of a side on which the positive electrode active substance layer is provided, where pore diameter of the pores exhibits a maximum circumferential diameter distribution of 1 μm-50 μm; and optionally, with pore depth set to H, inter-pore distance set to L, and thickness of the positive electrode plate set to T, relations in the following formulas (1) and (2) are satisfied:

$$H/T \geq 1/10 \qquad (1)$$

and

$$L/T \leq 10 \qquad (2).$$

The pore diameter, the pore depth, and the inter-pore distance satisfying the above conditions allow optimized liquid-phase diffusion of electrolyte, thereby further increasing the discharge capacity retention rate.

A second aspect of this application further provides a manufacturing method of the positive electrode plate for secondary battery according to the first aspect, where the method includes: a process of forming the porous layer containing the porous carbon material on surface of at least one side of a positive electrode current collector; and a process of applying a positive electrode slurry on the formed porous layer to form the positive electrode active substance layer. The porous layer containing the porous carbon material is formed on the surface of at least one side of the positive electrode current collector, and then the positive electrode active substance layer is formed on the formed porous layer, so that a secondary battery with high discharge capacity retention rate can be manufactured.

In any embodiment, the porous layer is formed by a slurry including the porous carbon material, acetylene black as a conductive agent, polyvinylidene fluoride as a binder, and N-methylpyrrolidone as a solvent. The porous layer can be formed effectively by the slurry.

A third aspect of this application further provides a secondary battery including the positive electrode plate according to the first aspect of this application or a positive electrode plate manufactured using the manufacturing method according to the second aspect of this application. This application can provide a secondary battery with high discharge capacity retention rate.

A fourth aspect of this application further provides a battery module including the secondary battery according to the third aspect of this application. The battery module includes the foregoing secondary battery and therefore has all beneficial effects of the secondary battery.

A fifth aspect of this application further provides a battery pack including the battery module according to the fourth aspect of this application. The battery pack includes the foregoing secondary battery and therefore has all beneficial effects of the secondary battery.

A sixth aspect of this application further provides an electric apparatus including the secondary battery according to the third aspect of this application, the battery module according to the fourth aspect of this application, or the battery pack according to the fifth aspect of this application. The electric apparatus includes the foregoing secondary battery and therefore has all beneficial effects of the secondary battery.

**BRIEF DESCRIPTION OF DRAWINGS**

FIG. 1 is a schematic cross-sectional diagram of a positive electrode plate for secondary battery cut along a thickness direction according to an embodiment of this application.

FIG. 2 is a schematic diagram of a secondary battery according to an embodiment of this application.

FIG. 3 is an exploded view of the secondary battery according to the embodiment of this application in FIG. 2.

FIG. 4 is a schematic diagram of a battery module according to an embodiment of this application.

FIG. 5 is a schematic diagram of a battery pack according to an embodiment of this application.

FIG. 6 is an exploded view of the battery pack according to the embodiment of this application in FIG. 5.

FIG. 7 is a schematic diagram of an electric apparatus using a secondary battery as a power source according to an embodiment of this application.

FIG. 8 is a CCD photo of surface of a positive electrode plate in example 1.

Description of reference signs:

1. battery pack; 2. upper box body; 3. lower box body; 4. battery module; 5. secondary battery; 10. positive electrode plate; 11. current collector; 12. porous layer; 13. positive electrode active substance layer; 51. housing; 52. electrode assembly; and 53. top cover assembly.

## DESCRIPTION OF EMBODIMENTS

The following specifically discloses embodiments of a positive electrode plate for secondary battery, a manufacturing method thereof, and a secondary battery, battery module, battery pack, and electric apparatus using such positive electrode plate for secondary battery in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combinations of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

An embodiment of this application provides a positive electrode plate for secondary battery including a current collector and a positive electrode active substance layer, and further including a porous layer containing a porous carbon material between the current collector and the positive electrode active substance layer.

In the prior art, to increase energy density of battery cells, coating weight of electrode plates is usually increased. However, increasing coating weight of electrode plates leads to deterioration of liquid-phase transmission in electrolyte of secondary batteries and extends transmission paths of lithium ions. As a result, electrochemical performance deteriorates, leading to a decrease in discharge capacity retention rate.

The inventors of this application have found that porous carbon materials such as hard carbon, activated carbon, and carbon aerogel have ultra-high specific surface areas (about 10 $m^2/g$-1000 $m^2/g$) and can adsorb a large amount of air, especially small molecule gas such as $CO_2$. The porous layer containing the porous carbon material is provided between the current collector and the positive electrode active substance layer, so that air adsorbed in the porous carbon material is displaced with a solvent. Upon desorption, the adsorbed air overflows out of surface of the electrode plate, forming uniform through holes. This facilitates continuous electrolyte conduction and penetration from the exterior to the interior of the electrode plate in an electrode, enabling high-speed migration of ions, and thus increasing discharge capacity retention rate of secondary batteries.

In some embodiments, the porous carbon material is selected from at least one of hard carbon, biomass carbon, activated carbon, carbon fiber, and carbon aerogel.

With high specific surface areas and abundant pores, these substances are used as porous carbon materials, so that efficient gas-liquid displacement can be ensured during preparation of the electrode plate, so as to reliably obtain the technical effect of increasing the discharge capacity retention rate of secondary batteries.

In some embodiments, the positive electrode plate for secondary battery is formed by the current collector, the porous layer, and the positive electrode active substance layer. For the positive electrode plate for secondary battery formed by such a stacked layer structure of the current collector, the porous layer, and the positive electrode active substance layer, thickness of the electrode plate does not get excessively large, electrolyte can properly penetrate the electrode plate, and ions can properly participate in reactions.

In some other embodiments, the positive electrode active substance layer contains lithium nickel cobalt manganese oxide, and the porous carbon material is hard carbon, activated carbon, or carbon aerogel. Lithium nickel cobalt manganese oxide is used as a positive electrode active material, and hard carbon, activated carbon, or carbon aerogel is used as the porous carbon material, so that the discharge capacity retention rate can further be more reliably increased.

In some embodiments, the porous carbon material includes micropores, mesopores, and macropores, where pore diameter of the micropores is 2 nm or below, pore diameter of the mesopores is greater than 2 nm and less than 50 nm, and pore diameter of the macropores is 50 nm or above.

In addition, in some embodiments, in the porous carbon material, a total pore volume of the micropores, mesopores, and macropores is 0.02 $cm^3/g$ or above, and a summed-up pore volume of the micropores and mesopores accounts for 5%-85% with respect to the total pore volume, and more preferably 50%-85%.

Such porous carbon material has abundant micropores and mesopores which can adsorb a large amount of air, especially small molecule gas such as $CO_2$. Therefore, air adsorbed in the porous carbon material is displaced with a solvent. Upon desorption, the adsorbed air overflows out of surface of the electrode plate, forming desired through holes and realizing porosity effect. This allows continuous electrolyte conduction and penetration from the exterior to the interior of the electrode plate in an electrode, thus increasing the discharge capacity retention rate of secondary batteries.

In this application, the pore volume can be measured using a fully automated gas adsorption analyzer.

In some embodiments, $D_v50$ of the porous carbon material is 1 $\mu$m-100 $\mu$m, preferably 1 $\mu$m-20 $\mu$m, and more preferably 1 $\mu$m-5 $\mu$m.

The porous carbon having such $D_v50$ can make the through holes formed in the surface of the electrode plate more uniform.

In this application, $D_v50$ is a corresponding particle size when a volume distribution percentage reaches 50%. For example, $D_v50$ can be easily measured in accordance with a particle size distribution laser diffraction method in GB/T 19077-2016 by using a laser particle size analyzer, for example, a laser particle size analyzer of Mastersizer 2000E from Malvern Instruments Ltd. of UK.

In some embodiments, a ratio of a specific surface area of the positive electrode plate under carbon dioxide atmosphere to a specific surface area of the positive electrode plate under nitrogen atmosphere is 2 or above. In the prior art, a specific surface area is generally characterized using adsorption and desorption under nitrogen atmosphere. However, it poses challenges in characterizing micropores and mesopores of porous carbon using nitrogen adsorption and desorption. Therefore, in this application, difference in specific surface area of porous carbon materials can be characterized using the specific surface area under carbon dioxide atmosphere, the specific surface area under nitrogen atmosphere, and the ratio of the two. When the ratio of the specific surface area under carbon dioxide atmosphere to the specific surface area under nitrogen atmosphere is 2 or above, the summed-up pore volume of the micropores and mesopores accounts for 50% or above with respect to the total pore volume.

In some embodiments, the specific surface area of the positive electrode plate under carbon dioxide atmosphere is 2 $m^2/g$ or above, and the specific surface area of the positive electrode plate under nitrogen atmosphere is 1 $m^2/g$ or

below.

The foregoing specific surface areas being realized is conducive to desorption of air adsorbed by the porous layer to form uniform through holes in the surface of the electrode plate, thereby facilitating electrolyte penetration from the exterior to the interior of the electrode plate, and thus further increasing the discharge capacity retention rate.

In this application, the specific surface area is calculated by using the multi-point Brunauer-Emmett-Teller method after measuring a nitrogen/carbon dioxide isothermal adsorption/desorption curve of the material using a fully automated gas adsorption analyzer, and the pore volume proportion is calculated by using the BJH method for the carbon dioxide adsorption/desorption curve of the material.

In some embodiments, under a condition that thickness of the positive electrode active substance layer is set to 100 parts by thickness, thickness of the porous layer accounts for 1-50 parts by thickness, preferably 3-30 parts by thickness. When the thickness of the porous layer is excessively thick or excessively thin, the technical effect of increasing the discharge capacity retention rate of secondary batteries cannot be obtained.

In some embodiments, the positive electrode plate has pores in surface of a side on which the positive electrode active substance layer is provided, where pore diameter of the pores exhibits a maximum circumferential diameter distribution of 1 $\mu$m-50 $\mu$m; and optionally, with pore depth set to H, inter-pore distance set to L, and thickness of the positive electrode plate set to T, relations in the following formulas (1) and (2) are satisfied:

$$H/T \geq 1/10 \qquad (1)$$

and

$$L/T \leq 10 \qquad (2).$$

Pore diameter, pore depth, and inter-pore distance are key influencing factors that influence liquid-phase diffusion of electrolyte. The pore diameter, pore depth, and inter-pore distance being specified as described above can facilitate liquid-phase diffusion of electrolyte, thereby further increasing the discharge capacity retention rate.

In this application, the pore diameter, pore depth, and inter-pore distance are obtained by taking photos of the electrode plate surface and cross section of the electrode plate using an optical electron microscope or an electron scanning electron microscope. Specifically, in a test on the surface of the electrode plate, the surface of the electrode plate is photographed so that pore distribution and pore diameter in surface of the active substance layer can be observed. In a test on the cross section of the electrode plate, the electrode plate is sliced in a direction perpendicular to the active substance layer, and the cross section is photographed for observing the pore depth in the active substance layer.

A manufacturing method of the positive electrode plate for secondary battery of this application includes: a process of forming the porous layer containing the porous carbon material on surface of at least one side of a positive electrode current collector; and a process of applying a positive electrode slurry on the formed porous layer to form the positive electrode active substance layer.

In some embodiments, in the process of forming the porous layer, the porous layer is formed by a slurry including the porous carbon material, acetylene black as a conductive agent, polyvinylidene fluoride as a binder, and N-methylpyrrolidone as a solvent.

In the prior art, slurries are typically used for coating after dry mixing, wet mixing with solvents, and vacuum degassing with negative pressure. If the porous carbon material is mixed in the slurry for forming the positive electrode active substance layer, pore formation in the surface of the electrode plate cannot be implemented unless vacuum degassing with negative pressure is eliminated. However, elimination of vacuum degassing with negative pressure affects flow stability of coating chamber during the coating process.

In this application, the porous layer is first formed on the current collector by, for example, coating, specifically by coating using a microgravure process; and then, the porous layer is left standing in air as needed (for example, for 12 hours) or exposed to small molecule gases such as $CO_2$ to rapidly adsorb gas, and then the gas is displaced with a solvent to implement pore formation. After this, the positive electrode slurry is applied on the porous layer after pore formation to form the positive electrode active substance layer. Therefore, the manufacturing method of this application requires no vacuum degassing with negative pressure, and a secondary battery using the positive electrode plate for secondary battery manufactured using this method has excellent discharge capacity retention rate.

The above examples show formation of the porous layer by coating, however, the method of forming porous layer is not limited to the coating method. For example, when the porous carbon material is carbon aerogel, the porous layer may alternatively be formed through CVD (chemical vapor deposition) and the like.

A secondary battery of this application includes the positive electrode plate of this application or a positive electrode plate manufactured using the manufacturing method of this application. A battery module of this application includes the secondary battery of this application. A battery pack of this application includes the battery module of this application. An electric apparatus of this application includes the secondary battery of this application, the battery module of this application, or the battery pack of this application.

In addition, the following describes the positive electrode plate for secondary battery, the battery module, the battery pack, and the electric apparatus of this application with appropriate reference to the accompanying drawings.

[Positive electrode plate]

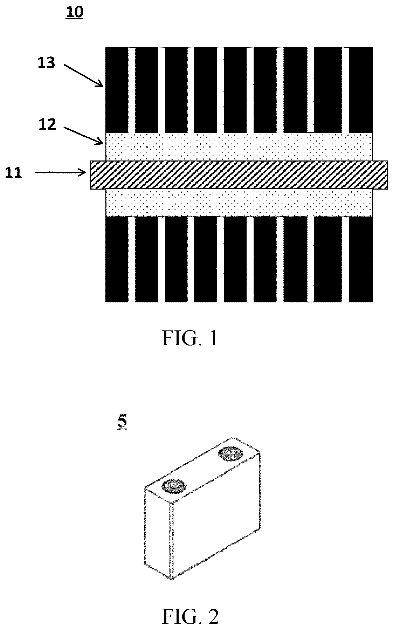

In some embodiments, a positive electrode plate includes a current collector and a positive electrode active substance layer, and further includes a porous layer containing a porous carbon material between the current collector and the positive electrode active substance layer. For example, as shown in the schematic diagram of FIG. 1, a positive electrode plate 10 includes a current collector 11, a porous layer 12, and a positive electrode active substance layer 13.

The current collector 11 has two opposite surfaces in its thickness direction. FIG. 1 illustrates a case in which the porous layer 12 and the positive electrode active substance layer 13 are formed on each of the two surfaces of the current collector 11. However, the porous layer 12 and the positive electrode active substance layer 13 may alternatively be formed on only one surface of the current collector 11.

In some embodiments, the current collector 11 may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, thickness of the current collector 11 is, for example, 5 $\mu$m-20 $\mu$m.

In some embodiments, the porous layer 12 is selected from at least one porous carbon material of hard carbon, biomass carbon, activated carbon, carbon fiber, and carbon aerogel.

In some embodiments, $D_v50$ of the porous carbon material is 1 $\mu$m-100 $\mu$m, preferably 1 $\mu$m-20 $\mu$m, and more preferably 1 $\mu$m-5 $\mu$m.

In some embodiments, the porous carbon material includes micropores with pore diameter of 2 nm or below, mesopores with pore diameter greater than 2 nm and less than 50 nm, and macropores with pore diameter of 50 nm or above. In addition, in some embodiments, in the porous carbon material, a total pore volume of the micropores, mesopores, and macropores is 0.02 $cm^3$/g or above, and a summed-up pore volume of the micropores and mesopores accounts for 5%-85% with respect to the total pore volume, and more preferably 50%-85%.

In some embodiments, the porous layer 12 further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the porous layer 12 further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode active substance layer 13 includes a positive electrode active material, and the positive electrode active material may be a well-known positive electrode active material used for a battery in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In some embodiments, the positive electrode active substance layer 13 further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active substance layer 13 further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the constituents used for preparing the porous layer, for example, the porous carbon material, the conductive agent, the binder, and any other constituent, are dispersed in a solvent (for example, N-methylpyrrolidone) to form a slurry for forming porous layer; the slurry for forming porous layer is applied onto a positive electrode current collector, followed by processes such as drying to form the porous layer; and the positive electrode with the porous layer is left standing in carbon dioxide atmosphere for 6 h for the porous carbon to adsorb carbon dioxide. The constituents used for preparing the positive electrode active substance layer, for example, the positive electrode active material, the conductive agent, the binder, and any other constituent, are dispersed in a solvent (for example, N-methylpyrrolidone) to obtain a positive electrode slurry; and the positive electrode slurry is applied onto the porous layer, followed by processes such as drying and cold pressing to obtain the positive electrode plate. In the drying process, the gas adsorbed in the porous layer is desorbed and overflows through the active substance layer to form a pore structure of the positive electrode active substance layer.

In some embodiments, the positive electrode plate prepared using the above method has at least any one of the following characteristics (1)-(3).

(1) A ratio of a specific surface area of the positive electrode plate under carbon dioxide atmosphere to a specific surface area of the positive electrode plate under nitrogen atmosphere is 2 or above.

(2) The specific surface area of the positive electrode plate under carbon dioxide atmosphere is 2 $m^2/g$ or above, and the specific surface area of the positive electrode plate under nitrogen atmosphere is 1 $m^2/g$ or below.

(3) The positive electrode plate has pores in surface of a side on which the positive electrode active substance layer is provided, where

pore diameter of the pores exhibits a maximum circumferential diameter distribution of 1 $\mu$m-50 $\mu$m; and
with pore depth set to H, inter-pore distance set to L, and thickness of the positive electrode plate set to T, relations in the following formulas (1) and (2) are satisfied:

$$H/T \geq 1/10 \qquad (1)$$

and

$$L/T \leq 10 \qquad (2).$$

[Negative electrode plate]

A negative electrode plate includes a negative electrode current collector and a negative electrode active substance layer disposed on at least one surface of the negative electrode current collector.

For example, the negative electrode current collector includes two opposite surfaces in its thickness direction, and the negative electrode active substance layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, a well-known negative electrode active material used for a battery in the art may be used in the negative electrode active substance layer.

For example, the negative electrode active material may include at least one of the following materials: a carbon material, a metal or non-metal compound, a coating material of the preceding compound, a dopant of the preceding compound, and the like. The carbon material includes at least one selected from graphite, hard carbon, and soft carbon; the metal or non-metal compound includes at least one of silicon, selenium, sulfur, phosphorus, tin, titanium or vanadium oxide, sulfide, selenide, and fluoride; the coating material of the preceding compound includes a coating material obtained by coating the metal or non-metal compound with graphite, soft carbon, or hard carbon; and the dopant of the preceding compound includes a dopant obtained by doping the metal or non-metal compound with at least one element selected from Mg, Ni, Co, and Mn. In some embodiments, the metal or non-metal compound includes at least one selected from $SiO_2$, SiO, $SnO_2$, $TiO_2$, $SiS_2$, and $TiS_2$. However, this application is not limited to these materials, but may use other conventional materials that can be used as negative electrode active materials for batteries instead. One of these negative electrode active materials may be used alone, or two or more of them may be used in combination.

In some embodiments, the negative electrode active substance layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active substance layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active substance layer further optionally includes other promoters such as a thickener (for example, sodium carboxymethyl cellulose (CMC-Na)).

In some embodiments, a dispersant may also be used during preparation of the negative electrode active substance layer. The dispersant is used to improve dispersion uniformity and coating performance and may be a dispersant commonly used in the battery field, for example, may be a polymer dispersant. For the polymer dispersant, the following may be used: polyvinyl alcohol, modified polyvinyl alcohol with a functional group other than hydroxyl, such as acetyl, sulfonyl, carboxyl, carbonyl, and amino, polyvinyl alcohol resins modified by various salts, modified by other anions or cations, or modified by acetal using aldehydes, or various (meth)acrylic acid polymers, polymers derived from ethylenically unsaturated hydrocarbons, various cellulose resins, and the like, or a copolymer thereof. However, the polymer dispersant is not limited thereto. One type of polymer dispersant may be used alone, or two or more types of it may be used in combination.

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bistrifluoromethanesulfonimide, lithium trifluoromethanesulfonate, lithium difluorophosphate, lithium difluoro(oxalato)borate, lithium dioxalate borate, lithium difluoro(dioxalato)phosphate, and lithium tetrafluoro oxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone.

In some embodiments, the liquid electrolyte further optionally includes an additive. For example, the additive may include a negative electrode film-forming additive or a positive electrode film-forming additive, or may include an additive capable of improving some performance of a battery, for example, an additive for improving overcharge performance of the battery, an additive for improving high-temperature performance or low-temperature performance of the battery.

[Separator]

In this application, a lithium-ion secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of same or different materials, which is not particularly limited.

[Secondary battery]

In some embodiments, the positive electrode plate, the negative electrode plate, and the separator may be made into an electrode assembly through winding or lamination.

In some embodiments, the lithium-ion secondary battery may include an outer package. The outer package may be used for packaging the foregoing electrode assembly and electrolyte.

In some embodiments, the outer package of the lithium-ion secondary battery may be a hard shell, for example, a hard plastic shell, an aluminum shell, or a steel shell. The outer package of the lithium-ion secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitations on a shape of the lithium-ion secondary battery, and the lithium-ion secondary battery may be cylindrical, rectangular, or of any other shapes. For example, FIG. 2 shows a rectangular lithium-ion secondary battery 5 as an example.

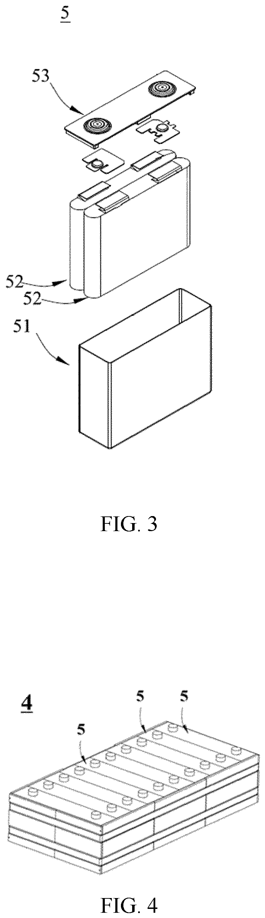

In some embodiments, referring to FIG. 3, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. One or more electrode assemblies 52 may be provided in the lithium-ion secondary battery 5, and persons skilled in the art may make choices based on actual needs.

In some embodiments, the lithium-ion secondary battery may be assembled into a battery module, and the battery module may include one or more lithium-ion secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged along a length direction of the battery module 4. Certainly, the batteries may alternatively be arranged in any other manners. Further, the plurality of secondary batteries 5 may be fixed by fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

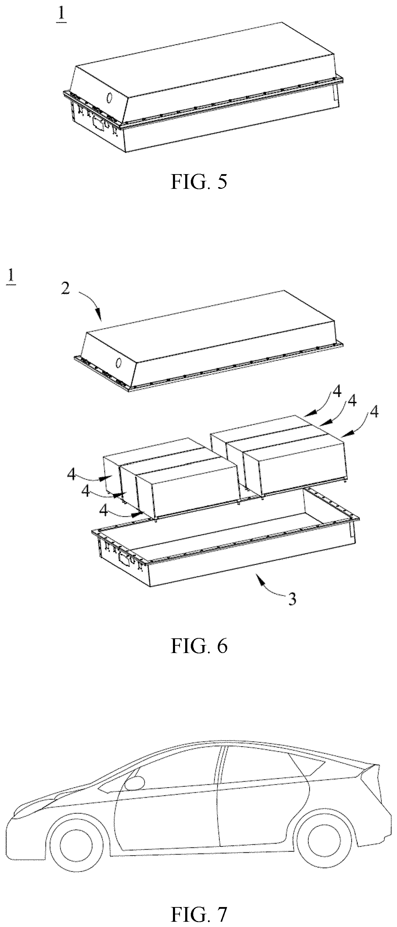

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes the lithium-ion secondary battery provided in this application. The lithium-ion secondary battery may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The lithium-ion secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy requirements of the electric apparatus for high power and high energy density of lithium-ion secondary batteries, a battery pack or a battery module may be used.

In another example, the apparatus may be a mobile phone, a tablet computer, a notebook computer, or the like. Such apparatus is generally required to be light and thin and may use a lithium-ion secondary battery as its power source.

Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

Porous carbon used in the following examples and comparative examples are as follows.

<Hard carbon 1>

A total pore volume of micropores, mesopores, and macropores: 0.04 cm$^3$/g
A summed-up pore volume of the micropores and mesopores with respect to the total pore volume: 52%
D$_v$50: 4.6 $\mu$m

<Hard carbon 2>

A total pore volume of micropores, mesopores, and macropores: 0.01 cm$^3$/g
A summed-up pore volume of the micropores and mesopores with respect to the total pore volume: 3%
D$_v$50: 8.2 $\mu$m

<Hard carbon 3>

A total pore volume of micropores, mesopores, and macropores: 0.046 cm$^3$/g
A summed-up pore volume of the micropores and mesopores with respect to the total pore volume: 58%
D$_v$50: 136 $\mu$m

<Activated carbon 1>

A total pore volume of micropores, mesopores, and macropores: 0.035 cm$^3$/g
A summed-up pore volume of the micropores and mesopores with respect to the total pore volume: 42%
D$_v$50: 7.8 $\mu$m

<Carbon aerogel 1>

A total pore volume of micropores, mesopores, and macropores: 0.062 cm$^3$/g
A summed-up pore volume of the micropores, and mesopores with respect to the total pore volume: 73%
D$_v$50: 3.8 $\mu$m

Example 1

<Preparation of positive electrode plate for secondary battery>

Hard carbon 1, acetylene black as a conductive agent, and polyvinylidene fluoride (PVDF) as a binder were mixed at a mass ratio of 60:20:20, and N-methylpyrrolidone (NMP) as a solvent was added. The mixture was stirred to obtain a slurry. The slurry was evenly applied onto an aluminum foil (with a thickness of 15 $\mu$m) as a positive electrode current collector, followed by standing in air for 12 hours at room temperature, to obtain an electrode plate coated with a porous layer.

$LiNi_{0.8}Co_{0.1}Mn_{0.1}O_2$ as a positive electrode active material, acetylene black as a conductive agent, and PVDF as a binder were mixed at a mass ratio of 96:2:2, and NMP as a solvent was added to obtain a positive electrode slurry. The obtained positive electrode slurry was evenly applied onto the surface of the porous layer to obtain a positive electrode active substance layer, followed by drying, cold pressing, and slitting, to obtain a positive electrode plate.

<Preparation of negative electrode plate of secondary battery>

Artificial graphite as a negative electrode active material, Super-P as a conductive agent, carboxymethyl cellulose (CMC) as a thickener, and styrene-butadiene rubber (SBR) as a binder were added to solvent deionized water at a mass ratio of 96.5:1.0:1.0:1.5, and mixed well to prepare a negative electrode slurry. The negative electrode slurry was applied onto a copper foil as a negative electrode current collector and then the copper foil was dried at 85°C, followed by trimming, cutting, slitting, and further drying under a vacuum condition at 110°C for 4 hours, and then a tab was welded, to prepare a negative electrode plate of secondary battery.

<Preparation of electrolyte of secondary battery>

Ethylene carbonate (EC), ethyl methyl carbonate (EMC), and diethyl carbonate (DEC) were mixed at a mass ratio of 1:1:1 to obtain a mixed solvent. Lithium hexafluorophosphate ($LiPF_6$) was dissolved in the mixed solvent to prepare an electrolyte with a concentration of 1M.

<Preparation of secondary battery>

The positive electrode plate, a polyethylene separator, and the negative electrode plate were sequentially stacked to obtain a bare cell. Then, the bare cell was placed into an outer package shell and dried. Next, the electrolyte was injected, and processes such as vacuum packaging, standing, formation, and shaping were performed to obtain a lithium-ion battery.

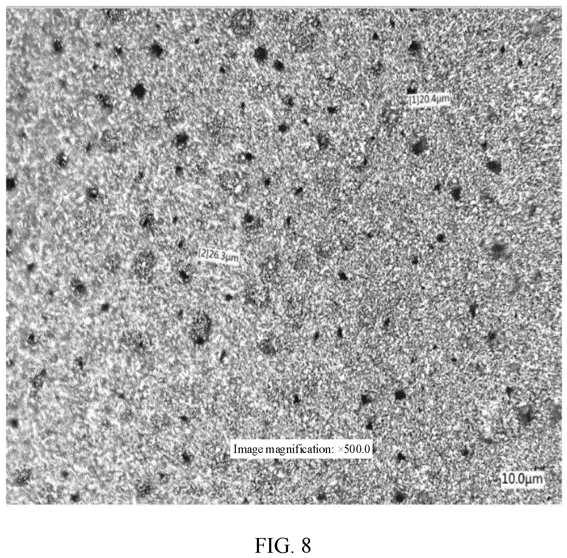

For the obtained secondary battery, a specific surface area under carbon dioxide atmosphere, a specific surface area under nitrogen atmosphere, pore diameter, pore depth, and inter-pore distance of pores in surface of a side of the positive electrode plate on which the positive electrode active substance layer is provided, and discharge capacity retention rate of battery at 2C were measured as described below. The measured results are shown in Table 1. A CCD photo of surface of a positive electrode plate obtained by photographing is shown in FIG. 8.

<Measurement of specific surface areas under carbon dioxide atmosphere and nitrogen atmosphere>

The specific surface area of the electrode plate was calculated by using the multi-point Brunauer-Emmett-Teller method after measuring a nitrogen/carbon dioxide isothermal adsorption/desorption curve of the material using a fully automated gas adsorption analyzer.

<Measurement of pore diameter, pore depth, and inter-pore distance of pores in surface of side of positive electrode plate on which positive electrode active substance layer is provided>

The pore diameter, pore depth, and inter-pore distance were obtained by taking photos of the electrode plate surface and cross section of the electrode plate using an optical electron microscope or an electron scanning electron microscope. Specifically, in a test on the surface of the electrode plate, the surface of the electrode plate was photographed so that pore distribution and pore diameter in surface of the active substance layer could be observed. In a test on the cross section of the electrode plate, the electrode plate was sliced in a direction perpendicular to the active substance layer, and the cross section was photographed for observing the pore depth in the active substance layer.

<Discharge capacity retention rate of battery at 2C>

At room temperature, the lithium-ion battery was charged to an upper limit voltage at a rate of 1/3C and then separately discharged to a lower limit voltage at 0.33C and 2C. A discharge capacity at a rate of 0.33C was used as a nominal capacity reference group, and a capacity retention rate of the lithium-ion battery discharged at a rate of 2C was calculated.

<CCD photo of surface of positive electrode plate>

The photo of the surface of the positive electrode plate in example 1 is shown in FIG. 8. It can be learned from FIG. 8 that presence of abundant pores in the surface of the electrode plate is conducive to facilitating continuous electrolyte conduction and penetration from the exterior to the interior of the electrode plate in the electrode, enabling high-speed migration of ions, and thus increasing the discharge capacity retention rate.

Example 2

Preparation of positive electrode plate of secondary battery: the same operations were performed as in example 1 to prepare a positive electrode plate for secondary battery, except that a thickness ratio of the porous layer to the positive electrode active substance layer was changed as shown in Table 1.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Example 3

Preparation of positive electrode plate of secondary battery: the same operations were performed as in example 1 to prepare a positive electrode plate for secondary battery, except that a thickness ratio of the porous layer to the positive electrode active substance layer was changed as shown in Table 1.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Example 4

Preparation of positive electrode plate of secondary battery: the same operations were performed as in example 1 to prepare a positive electrode plate for secondary battery, except that hard carbon 1 was replaced with hard carbon 2.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Example 5

Preparation of positive electrode plate of secondary battery: the same operations were performed as in example 1 to prepare a positive electrode plate for secondary battery, except that hard carbon 1 was replaced with hard carbon 3.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Example 6

Preparation of positive electrode plate of secondary battery: the same operations were performed as in example 1 to prepare a positive electrode plate for secondary battery, except that a thickness ratio of the porous layer to the positive electrode active substance layer was changed as shown in Table 1.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Example 7

Preparation of positive electrode plate of secondary battery: the same operations were performed as in example 1 to prepare a positive electrode plate for secondary battery, except that hard carbon 1 was replaced with activated carbon 1.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Example 8

Preparation of positive electrode plate of secondary battery: the same operations were performed as in example 1 to prepare a positive electrode plate for secondary battery, except that hard carbon 1 was replaced with carbon aerogel 1.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Comparative example 1

$LiNi_{0.8}Co_{0.1}Mn_{0.1}O_2$ as a positive electrode active material, acetylene black as a conductive agent, and PVDF as a binder were mixed at a mass ratio of 96:2:2, and NMP as a solvent was added to obtain a positive electrode slurry. The obtained positive electrode slurry was evenly applied onto an aluminum foil (with a thickness of 15 $\mu$m) as a positive electrode current collector to obtain a positive electrode active substance layer, followed by drying, cold pressing, and slitting, to obtain a positive electrode plate.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Comparative example 2

$LiNi_{0.8}Co_{0.1}Mn_{0.1}O_2$ as a positive electrode active material, acetylene black as a conductive agent, PVDF as a binder, and hard carbon 1 were mixed at a mass ratio of 90:2:2:6, and NMP as a solvent was added to obtain a positive electrode composite slurry. The obtained positive electrode composite slurry was evenly applied onto an aluminum foil (with a thickness of 15 $\mu$m) as a positive electrode current collector to obtain a positive electrode active substance layer, followed by drying, cold pressing, and slitting, to obtain a positive electrode plate.

Preparation of negative electrode plate of secondary battery: the same operations were performed as in example 1 to prepare a negative electrode plate of secondary battery.

Preparation of electrolyte of secondary battery: the same operations were performed as in example 1 to prepare an electrolyte.

Preparation of secondary battery: the same operations were performed as in example 1 to complete preparation of a secondary battery.

Compositions and performance parameters of the secondary batteries of examples 1 to 8 and comparative examples 1 and 2 are shown in Table 1 below.

**Table 1**

| | Example 1 | Example 2 | Example 3 | Example 4 | Example 5 | Example 6 | Example 7 | Example 8 | Comparative example 1 | Comparative example 2 |
|---|---|---|---|---|---|---|---|---|---|---|
| Type of porous carbon material | Hard carbon 1 | Hard carbon 1 | Hard carbon 1 | Hard carbon 2 | Hard carbon 3 | Hard carbon 1 | Activated carbon 1 | Carbon aerogel 1 | - | Hard carbon 1 |
| Thickness of active substance layer ($\mu$m) | 100 | 100 | 100 | 100 | 100 | 100 | 100 | 100 | 100 | 100 |
| Thickness ratio of porous layer to active substance layer | 18:100 | 6:100 | 45:100 | 18:100 | 20:100 | 96:100 | 19:100 | 17:100 | - | - |
| Thickness T of positive electrode plate ($\mu$m) | 118 | 106 | 145 | 118 | 120 | 196 | 119 | 117 | 100 | 100 |
| Whether specific formulas (1) and (2) are satisfied * | Yes | Yes | Yes | Yes | Yes | Yes | Yes | Yes | No | No |
| Specific surface area under $CO_2$ (m²/g) | 2.4 | 2.2 | 3.0 | 1.8 | 2.6 | 3.6 | 2.9 | 4.2 | 1.2 | 2.2 |
| Specific surface area under $N_2$ (m²/g) | 0.78 | 0.79 | 0.82 | 0.77 | 0.78 | 0.90 | 0.81 | 0.95 | 0.77 | 0.78 |
| Discharge capacity retention rate of battery at 2C | 97.5% | 93.8% | 90.8% | 84.7% | 82.2% | 88.9% | 98.2% | 99.0% | 66.2% | 72.3% |

* Formula (1): $H/T \geq 1/10$; and formula (2): $L/T \leq 10$, where H is pore depth of the pores in the surface of the positive electrode plate, L is inter-pore distance of pores in the surface of the positive electrode plate.

It can be learned from the foregoing results that in examples 1 to 8, since the positive electrode plate has the porous layer between the current collector and the positive electrode active substance layer, a ratio of the specific surface area of the positive electrode plate under carbon dioxide atmosphere to the specific surface area of the positive electrode plate under nitrogen atmosphere is 2 or above, and the discharge capacity retention rate of battery at 2C is high. In particular, in examples 1, 2, 3, 7, and 8, for which, in the porous carbon material, a total pore volume, a proportion of micropores and mesopores, $D_v50$, and a thickness ratio of the porous layer to the active substance layer fall within specified ranges, the discharge capacity retention rate of battery at 2C is particularly high.

In contrast, the positive electrode plate in comparative example 1 contains no porous carbon material, and although the positive electrode plate in comparative example 2 contains a porous carbon material, the porous carbon material does not form a porous layer separately but is mixed with the positive electrode active material and contained in a positive electrode composite material layer, so that the discharge capacity retention rate of battery at 2C is lower than in the examples.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1.  A positive electrode plate for secondary battery, **characterized by** comprising:
    a current collector and a positive electrode active substance layer, and further comprising a porous layer containing a porous carbon material between the current collector and the positive electrode active substance layer.

2.  The positive electrode plate for secondary battery according to claim 1, **characterized in that**
    the porous carbon material is selected from at least one of hard carbon, biomass carbon, activated carbon, carbon fiber, and carbon aerogel.

3.  The positive electrode plate for secondary battery according to claim 1 or 2, **characterized in that**
    the positive electrode plate for secondary battery is formed by the current collector, the porous layer, and the positive electrode active substance layer.

4.  The positive electrode plate for secondary battery according to any one of claims 1 to 3, **characterized in that**

    the positive electrode active substance layer contains lithium nickel cobalt manganese oxide; and
    the porous carbon material is hard carbon, activated carbon, or carbon aerogel.

5.  The positive electrode plate for secondary battery according to any one of claims 1 to 4, **characterized in that**
    the porous carbon material comprises micropores, mesopores, and macropores, wherein pore diameter of the micropores is 2 nm or below, pore diameter of the mesopores is greater than 2 nm and less than 50 nm, and pore diameter of the macropores is 50 nm or above.

6.  The positive electrode plate for secondary battery according to claim 5, **characterized in that**
    in the porous carbon material, a total pore volume of the micropores, mesopores, and macropores is 0.02 $cm^3$/g or above, and a summed-up pore volume of the micropores and mesopores accounts for 5%-85% with respect to the total pore volume.

7.  The positive electrode plate for secondary battery according to any one of claims 1 to 6, **characterized in that**
    $D_v50$ of the porous carbon material is 1 $\mu$m-100 $\mu$m, optionally 1 $\mu$m-20 $\mu$m.

8.  The positive electrode plate for secondary battery according to any one of claims 1 to 7, **characterized in that**
    a ratio of a specific surface area of the positive electrode plate under carbon dioxide atmosphere to a specific surface area of the positive electrode plate under nitrogen atmosphere is 2 or above.

9.  The positive electrode plate for secondary battery according to claim 8, **characterized in that**
    the specific surface area of the positive electrode plate under carbon dioxide atmosphere is 2 $m^2$/g or above, and the specific surface area of the positive electrode plate under nitrogen atmosphere is 1 m²/g or below.

10. The positive electrode plate for secondary battery according to any one of claims 1 to 9, **characterized in that** under a condition that thickness of the positive electrode active substance layer is set to 100 parts by thickness, thickness of the porous layer accounts for 1-50 parts by thickness, optionally 3-30 parts by thickness.

11. The positive electrode plate for secondary battery according to any one of claims 1 to 10, **characterized in that**

the positive electrode plate has pores in surface of a side on which the positive electrode active substance layer is provided, wherein
pore diameter of the pores exhibits a maximum circumferential diameter distribution of 1 μm-50 μm; and
optionally, with pore depth set to H, inter-pore distance set to L, and thickness of the positive electrode plate set to T, relations in the following formulas (1) and (2) are satisfied:

$$H/T \geq 1/10 \qquad (1)$$

and

$$L/T \leq 10 \qquad (2).$$

12. A manufacturing method of the positive electrode plate for secondary battery according to any one of claims 1 to 11, **characterized by** comprising:

a process of forming the porous layer containing the porous carbon material on surface of at least one side of a positive electrode current collector; and
a process of applying a positive electrode slurry on the formed porous layer to form the positive electrode active substance layer.

13. The manufacturing method of the positive electrode plate for secondary battery according to claim 12, **characterized in that**
the porous layer is formed by a slurry comprising the porous carbon material, acetylene black as a conductive agent, polyvinylidene fluoride as a binder, and N-methylpyrrolidone as a solvent.

14. A secondary battery, **characterized by** comprising:
the positive electrode plate according to any one of claims 1 to 11 or a positive electrode plate manufactured using the manufacturing method according to claim 12 or 13.

15. A battery module, **characterized by** comprising:
the secondary battery according to claim 14.

16. A battery pack, **characterized by** comprising:
the battery module according to claim 15.

17. An electric apparatus, **characterized by** comprising:
at least one of the secondary battery according to claim 14, the battery module according to claim 15, or the battery pack according to claim 16.

10

13

12

11

FIG. 1

5

FIG. 2

5

53

52

52

51

FIG. 3

4

5   5

5

FIG. 4

1

FIG. 5

1

2

4 4 4

4
4

4

3

FIG. 6

FIG. 7

FIG. 8

## INTERNATIONAL SEARCH REPORT

| International application No. |
|---|
| **PCT/CN2022/094487** |

**A.    CLASSIFICATION OF SUBJECT MATTER**

H01M 10/0525(2010.01)i;  H01M 4/13(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 正极, 阴极, 碳, 炭, 层, 集流, 集电, 汇流, 体, 板, 件, 孔, positive, cathode, carbon, layer, collector, hole, porous

**C.    DOCUMENTS CONSIDERED TO BE RELEVANT**

| Category* | Citation of document, with indication, where appropriate, of the relevant passages | Relevant to claim No. |
|---|---|---|
| X | CN 112701249 A (KUNSHAN BAOCHUANG NEW ENERGY TECHNOLOGY CO., LTD.) 23 April 2021 (2021-04-23) description, paragraphs [0006]-[0039] | 1-4, 7, 10, 12-17 |
| A | CN 107994207 A (NINGDE CONTEMPORARY AMPEREX TECHNOLOGY CO., LTD.) 04 May 2018 (2018-05-04) entire document | 1-17 |
| A | CN 105932297 A (SOUTH CHINA UNIVERSITY OF TECHNOLOGY) 07 September 2016 (2016-09-07) entire document | 1-17 |
| A | CN 108511689 A (WANXIANG 123 STOCK CO., LTD. et al.) 07 September 2018 (2018-09-07) entire document | 1-17 |
| A | JP 2022010459 A (SHOWA DENKO MATERIALS CO., LTD.) 17 January 2022 (2022-01-17) entire document | 1-17 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **29 November 2022** | **21 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/094487**

| Patent document cited in search report | | | Publication date (day/month/year) | Patent family member(s) | Publication date (day/month/year) |
|---|---|---|---|---|---|
| CN | 112701249 | A | 23 April 2021 | None | |
| CN | 107994207 | A | 04 May 2018 | None | |
| CN | 105932297 | A | 07 September 2016 | None | |
| CN | 108511689 | A | 07 September 2018 | None | |
| JP | 2022010459 | A | 17 January 2022 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 190772016 T